# EUROPEAN PATENT APPLICATION

(11) **EP 1 014 284 A2**
(43) Date of publication of application: **28.06.2000**
(21) Application number: 99650024.5
(22) Date of filing: 12.03.1999
(51) Int. Cl.: G06F 17/30

(54) **A transaction processing system**

(30) Priority: 23.12.1998 IE 981104
(71) Applicant: Hinds, Raymond Paul, Blackrock, County Cork (IE); Hinds, Walter Raymond, Foxrock, County Dublin (IE); Hinds, Paul Peter, Inniscara, County Cork (IE)
(72) Inventor: Hinds, Raymond Paul, Blackrock, County Cork (IE); Hinds, Walter Raymond, Foxrock, County Dublin (IE); Hinds, Paul Peter, Inniscara, County Cork (IE)
(74) Representative: Weldon, Michael James

(57) **Abstract**

A transaction processing system (1) has a set of modules (4 -6) accessed via a router (3). The modules operate independently, but access programs and other modules via a pass co-ordinator (7) which automatically supplies a list of paths in priority order. Data files (10-13) in flat format are accessed separately via the central node (2), as is a database engine (15) an automatic update program (16) takes update information from an external source, writes it to a temporary memory section, and gradually clears this section by use of a structure buffer and a control register in the central node (2) to automatically complete an update.

## Description

The invention relates to a transaction processing system comprising a storage device for storing a transaction database data, and a processor comprising means for retrieving data, processing transactions in response to user instructions, and storing updated data.

Many such systems comprise a large number of database files, complex database structures and many thousands of lines of application code. It is for this reason that one of the major problems facing both system users and suppliers is that of keeping systems up-to-date with improvements as they arise. Particular suppliers may have hundreds of client sites it is therefore a major challenge to keep all client sites up-to-date in a simple and effective manner.

The invention is directed towards providing a transaction processing system which may be easily updated with excellent data integrity.

Another object is that the system operates in a modular manner so that it may be configured by the supplier in a versatile manner and business entities of a client may have separate transaction processing, while also allowing controlled integration for execution of a wide variety of programs.

According to the invention there is provided a transaction processing system comprising a storage device storing transaction database data, and a processor comprising means for retrieving transaction data, processing transactions according to user instructions and storing updated data characterised in that the processor is operable according to:-
a set of application code modules including a module containing database table definition files,
a database engine,
a central node connected to the modules, the database data, and the database engine, the central node storing a control register of items names of database tables application program items, and
an automatic system update means comprising means for:-
   reading from an external source a set of database table and application program update items, and
   carrying out an update process for each item in turn by:-
      determining if the item is listed in the control register,
      if in the control register, overwriting the item in a module and informing the database engine of the update, and
      if not in the register, writing an item name to the register, writing the item to a relevant module, and informing the database engine of the update.

The linking of the central node connected to application code modules, to stored data, and to the database engine, use of a control register and its location, and operation of the automatic update means provide for simple, effective and systematic updating of both code and database structures with excellent data integrity.

In one embodiment, the update means comprises means for mapping a temporary memory section, for writing the update items to the section, for clearing the section of each item as it is updated, and for recognising the system update as being complete when the section has been cleared. This is a simple and transparent mechanism for triggering updating.

Preferably, the update means comprises means for retrieving an update structure according to categories of update items, and for automatically completing the structure using the received update items.

In another embodiment, the update structure is structured according to a naming convention providing search indexes for searching the control register.

In a further embodiment, the update structure comprises mapped memory sections for menus, forms, triggers, reports and database structures

In a further embodiment, each dataset comprises an index and a relational table.

Preferably, the central node and the modules are linked by a module routing node.

In another embodiment, the system further comprises a path co-ordinator comprising means for automatically issuing a of path of modules in priority order in response to a module path request.

In the latter embodiment, the modules in the path may include a client-specific application code module and said module is first in priority order, and the requesting module is in second priority order.

The invention will be more clearly understood from the following description of some embodiments thereof, given by way of example only with reference to the accompanying drawings in which:-
Fig. 1 is a schematic representation of a transaction processing system of the invention; and
Figs. 2(a) and 2(b) are together a flow diagram illustrating the manner in which the system is automatically updated.

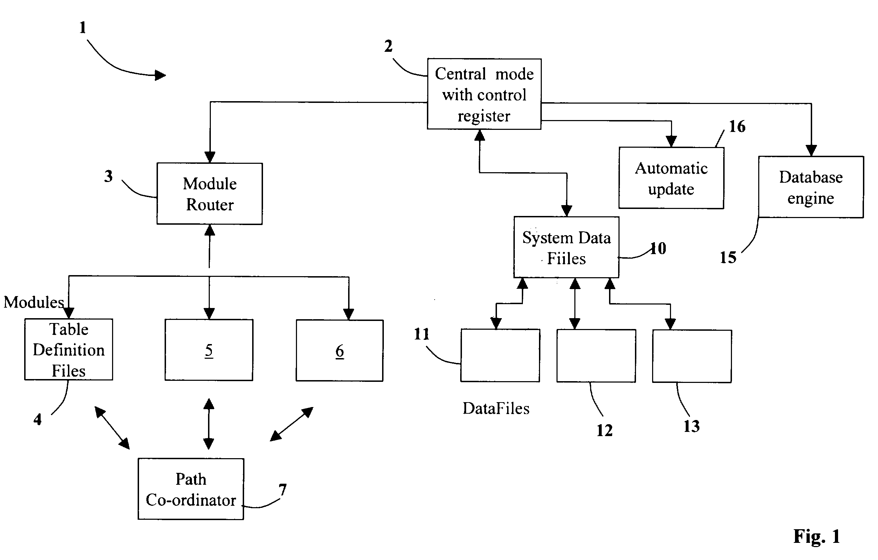

Referring to the drawings, and initially to Fig. 1 a transaction processing system 1 is shown. The system 1 comprises a central node 2 which provides a path to various modular parts of the system. The modularity is designed to achieve effective system operation whereby different departments within an organisation can be regarded as individual and separate business entities for transaction-handling purposes, while the benefits of integration are also achieved.

The central node 2 provides a path to various branches of application code and database structures. One path is to a module router 3, which in turn provides a path to a number of modules 4 to 6. In practice, there would be more than three modules, only three being illustrated for clarity. The modules 5 and 6 each relate to an individual department within a transaction-handling organisation. For example, where the system is used by a motor dealer, one module may relate to sales, another for general ledger, another for workshop, and another for used car sales. From a business perspective, it is clearly advantageous to have each of these entities regarded as separate, however, it is clearly beneficial to have a level of integration which allows programs interact with each other. This may, for example, allow workshop costs to be allocated to sales. Interaction is achieved by use of a path co-ordinator 7 which receives requests from the modules 4 to 6 for paths to programs which are required. The co-ordinator 7 automatically transmits a response which includes a priority listing of paths, the first being client-specific module programs only relating to the particular system, the second being the requesting module, and the following paths being in a pre-set pattern according to the nature of the requesting module. This is a very simple and effective mechanism for providing paths to programs which are required so that there is excellent integration of the modules, while at the same time they operate to a large extent as individual entities.

The module 4 comprises database table definition files. It has been found to be beneficial to include table definition files in the system as a module together with application code modules. The reasons for this are set out in detail below.

The central node 2 also provides access to data in the form of a hierarchy comprising system data files 10 and a number of client data files, three of which are illustrated by the numerals 11, 12 and 13. All of the data files are in a relational table format. The system data files 10 are common across a number of companies in a client site. The company files 11 to 13 are specific to companies, such as sales or purchasing company entities.

The central node also provide access to a database engine 15 which comprising application code for controlling database actions. Finally, the system 1 comprises an automatic update program 16, again accessed directly from the central node 2.

The central node 2 comprises a control register which is a list of codes identifying all items which may be involved in an update of the system 1. This includes application code programs and database tables. It will thus be apparent form the diagram of Fig. 1 that the database is effectively spread between the table definition files in the module 4, the database engine 15, the system data files 10, the company data files 11 to 13, and the control register in the node 2. While the database is therefore distributed in this manner it does provide for efficient database operation and it also allows very effective and simple updating under the control of the automatic update program 16.

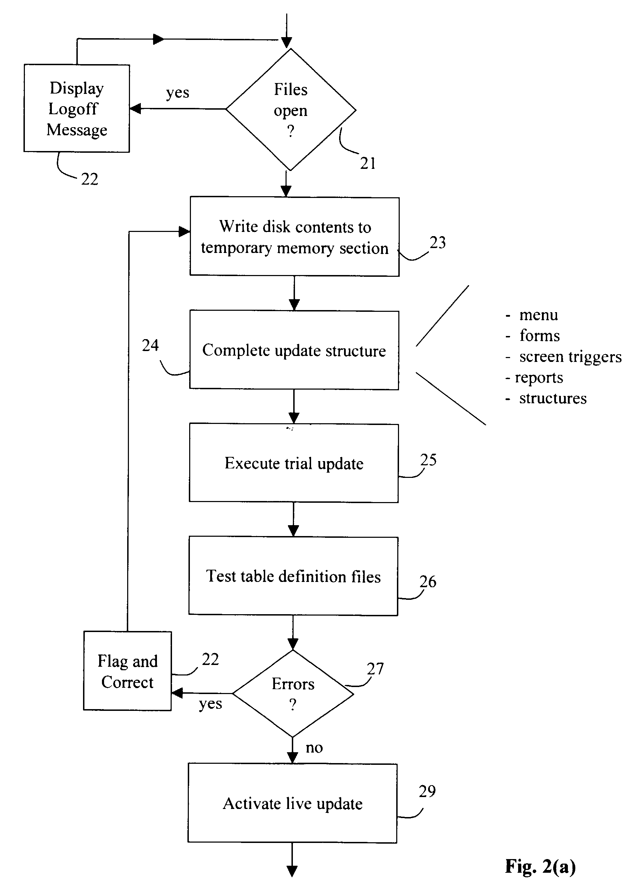

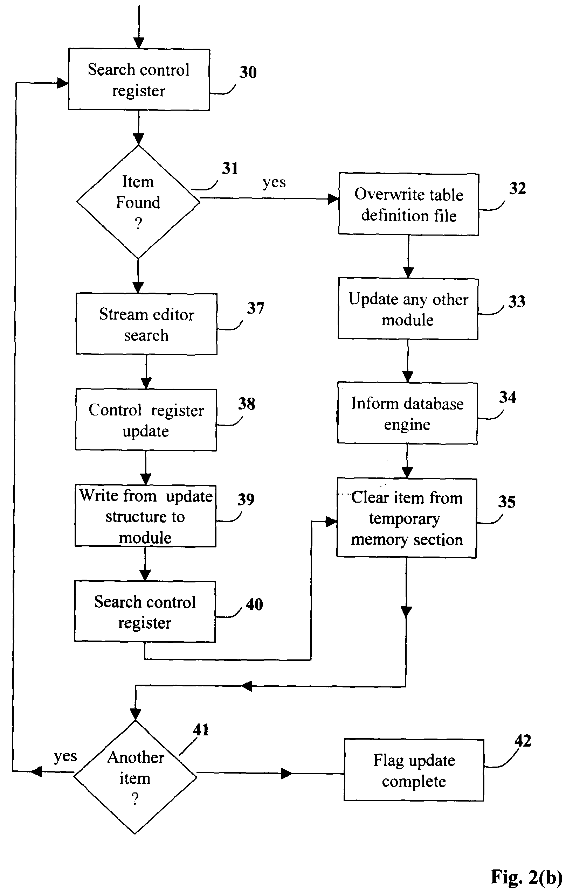

Referring now to Figs. 2(a) and 2(b), a process 20 for updating the system 1 is now described. When an update request is received from a user, the automatic update program 16 is activated via the node 2. It initially interrogates the database engine 15 in step 21 to determine if any database table files are open and in step 22 it displays a message indicating that any current users should log off. Once all of the database table files have been closed, the program 16 accesses the update information from an external source such as a disc inserted in the hardware drive or a network. In step 23 the contents of the disc are written to a separate mapped temporary memory section. This is used as a source for information during the update and the update progresses from a situation in which this section is full to one of which the section has been cleared. This is very important for the purposes of update control.

In step 24 the program 16 retrieves a fixed updating structure comprising of this embodiment sections for menus, forms, triggers, reports, and database structures. These sections are therefore each for a particular category of updatable items. The menus are screen menus for display of options, the forms are screen layouts for user-database interfacing, the triggers are control programs which interface with the database, the reports are of extracted data, and the structures are database structures defining the tables and the manner in which they are interrelated. In step 24 this "skeleton" structure is completed by reading through the names of all of the items in the temporary memory section and writing the names to one or other of the sections in the structure. This provides a framework for automatic updating in which the program 16 processes items for each section in turn. These items are named according to a naming convention which is set according to the structure and is reflected in the arrangement of modules accessed via the module router 3.

In steps 25 to 28 the program 16 performs a trial update using dummy data and application code in a separate section of memory. This is a limited version of the full update, described with reference to steps 29 to 42 of Figs. 2(a) and 2(b). As indicated by the decision step 27, any errors are flagged and corrected in step 28. The process is then re-started at step 23. Alternatively, if the trial update has been successful a live update is activated in step 29.

In step 30 the program 16 searches the control register in the node 2. According to the naming convention which is compatible with the update structure. The purpose of the search is to identify any items which are named in the update structure. As indicated by the step 31, if an item is found in step 32 the program 16 overrides the table definition file in the module 4 if this is necessary. In most cases it is, even if the major change has been for application code, this generally does have an effect on associated database tables. In step 33 other modules are updated, typically with application code updates. This involves overwriting the existing application code rather than amending particular lines of the existing code. In step 34 the database engine 15 is informed of the update. This completes the update when the update item already exists on the system and therefore, the program 16 in step 35 clears the update item from the temporary memory section.

If the item is not found and it is therefore a new addition for the system, in step 37 a stream editor program is activated and it searches the control register to locate a position for insertion of the item name. This performs to avoid simple appending the item names on. It is important to add the item name at a particular location in the register to mirror the update structure and indeed the structure of the modules accessed via the module router 3. Upon location of the correct position, the control register is updated in step 38. In step 39, the item is read from the update structure and is written to the particular module. Again, this will in most instances involve addition of a database table, however, it may only involve addition of application to other modules. In step 40 the database engine 15 is informed of this step, and this completes the update for that particular item. Step 35 is therefore performed to clear the item from the temporary memory section. As indicated by the decision in step 41, these steps are repeated for each item in the update structure until all of the items have been cleared from the temporary memory section. The update structure provides a buffer which is used by the update program to perform the update whereas the temporary memory section is cleared only after the update structure has been used and the update has been performed in an atomic manner. When the temporary memory section has been cleared and all programs have been generated successfully, a successful update message is flagged to the user in step 42. This ensures that all executable code is correct.

It will be appreciated that the structure of the system 1 provides for not only effective transaction processing but also simple effective and automatic updating. It is only necessary for the user to insert a disc. This disc may be supplied by the system supplier to all of the clients. Very little skill is required by the client user to activate the update as it is performed automatically once the disc has been inserted and the instruction inputted. It will also be appreciated that the system allows excellent versatility by providing a modular program and database structure while also allowing interaction of modules for controlled integration.

The invention is not limited to the embodiments described but may be varied in construction and detail.

## Claims

1. A transaction processing system comprising a storage device storing transaction database data, and a processor comprising means for retrieving transaction data, processing transactions according to user instructions and storing updated data characterised in that the processor is operable according to:-
a set of application code modules (4-6) including a module (4) containing database table definition files,
a database engine (15),
a central node (2) connected to the modules, the database data, and the database engine, the central node storing a control register of items names of database tables application program, and
an automatic system update means (16) comprising means for:-
reading (23) from an external source a set of database table and application program update items, and
carrying out an update process for each item in turn by:-
determining if the item is listed in the control register (30),
if in the control register, overwriting (32) the item in a module and informing (34) the database engine of the update, and
if not in the register, writing an item name to the register (38), writing (39) the item to a relevant module, and informing (40) the database engine of the update.

2. A system as claimed in claim 1, wherein the update means comprises means for mapping a temporary memory section (23), for writing the update items to the section (23), for clearing the section of each item as it is updated, and for recognising (41) the system update as being complete when the section has been cleared.

3. A system as claimed in claim 1 or 2, wherein the update means comprises means for retrieving an update structure according to categories of update items, and for automatically completing (24) the structure using the received update items.

4. A system as claimed in claim 3, wherein the update structure is structured according to a naming convention providing search indexes for searching the control register.

5. A system as claimed in claims 3 or 4, wherein the update structure comprises mapped memory sections for menus, forms, triggers, reports and database structures.

6. A system as claimed in any preceding claim, wherein each dataset comprises an index and a relational table.

7. A system as claimed in any preceding claim, wherein the central node (2) and the modules (4-6) are linked by a module routing node (30).

8. A system as claimed in any preceding claim, wherein the system further comprises a path co-ordinator (7) comprising means for automatically issuing a path of modules in priority order in response to a module path request.

9. A system as claimed in claim 8, wherein the modules in the path include a client-specific application code module and said module is first in priority order and the requesting module is in second priority order.
